# EUROPEAN PATENT SPECIFICATION

(11) **EP 1 052 204 B1**
(45) Date of publication and mention of the grant of the patent: **26.11.2003**
(21) Application number: 00109652.8
(22) Date of filing: 05.05.2000
(51) Int. Cl.: B65G 57/02, B65G 59/02, B23Q 7/06, B23Q 7/04, B23D 47/04

(54) **Panel pickup and feed system**
Plattenaufnahme- und Zuführsystem
Système de prise et d'alimentation de panneaux

(30) Priority: 07.05.1999 IT BO990236
(43) Date of publication of application: 15.11.2000
(73) Proprietor: BIESSE S.p.A., 61100 Pesaro (IT)
(72) Inventor: Naldi, Valter, 40100 Bologna (IT)
(74) Representative: Cerbaro, Elena, Dr.

(56) References cited:
- EP-A- 0 552 743
- EP-A- 0 571 339
- WO-A-99/20441
- DE-A- 3 716 651
- US-A- 4 405 276
- US-A- 4 431 358
- US-A- 4 796 500

## Description

The present invention relates to a panel pickup and feed system.

For conveying packs of panels, in particular undulated panels, systems are used featuring a pickup and feed device comprising at least one push assembly and at least one gripping assembly, which are both fitted to a conveying beam movable, by a respective drive assembly, between a rest position and a work position in which the panels are loaded onto the work unit. At each work stage, after sliding the desired pack of panels off the stack, the push assembly, which is located in front of the gripping assembly in the travel direction of the beam, automatically switches position with respect to the gripping assembly so that, when the pack of panels leaves the stack, the gripping assembly automatically takes over from the push assembly with no pause in the movement of the conveying beam, which, as stated, supports both the push and gripping assembly.

Though a big improvement over previous systems, for example of the type disclosed in EP-A-552 743 or in US 4 405 276 A, by greatly reducing machine time, systems of the above type still fail to solve the problem of the downtime involved in forming a second pack of panels as the first pack is fed forward. On systems of this sort, in fact, the conveying beam must be allowed to move back to the starting station before the stack of panels can be raised to the required height of the second pack, and so on, until all the panels in the stack are used up. Conversely, if the lifting device is raised before the conveying beam starts to move back, the push and/or gripping assembly would collide with the top panels in the stack, thus seriously endangering the stability of the stack.

As a result, valuable time is lost in forming the packs of panels for supply to the work unit.

It is an object of the present invention to provide a panel pickup and feed system designed to eliminate the aforementioned drawbacks.

More specifically, it is an object of the present invention to provide a panel pickup and feed system capable of switching, with no interruption, between the work stage of the push assembly and the work stage of the gripping assembly in the course of the work stroke of the conveying beam from the rest station to the work station to supply a first pack of panels, and of simultaneously forming a second pack on the lifting device in the course of the work stroke of the first cycle. The above process is obviously repeated until all the panels in the stack are removed in the form of packs.

According to the present invention, therefore, there is provided a system for picking up and feeding panels, the system comprising at least one feed surface for supplying a work unit for processing panels; at least one lifting device for intermittently raising a corresponding stack of panels; and at least one pickup and feed device for removing and feeding one pack of panels at a time off the top of the stack of panels onto the feed surface. The pickup and feed device in turn comprises at least one push assembly and at least one gripping assembly for respectively pushing and gripping the pack of panels, wherein in the course of the work stroke to remove and feed the pack of panels from the stack to the work unit, the system provides for a continuous uninterrupted switch from the work stage of the push assembly to the work stage of the gripping assembly, and
in the course of the work stroke to remove and feed a first pack of panels from the stack to the work unit during a first cycle, the lifting device is able to simultaneously raise to simultaneously form a second pack at the top of the stack, the second pack being ready for removal at a second cycle; and the push assembly and the gripping assembly are so raised, during the return stroke of the first cycle, as to avoid colliding with the second pack at the top of the stack.

A non-limiting embodiment of the present invention will be described by way of example with reference to the accompanying drawings, in which:
Figure 1 shows the system according to the present invention in the initial configuration;
Figures 2 to 5 show the Figure 1 system in various work configurations;
Figure 6 shows a side view of a push assembly forming part of the Figure 1-5 system;
Figure 7 shows a plan view of the Figure 6 push assembly;
Figure 8 shows a side view, in the raised position, of a gripping assembly forming part of the Figure 1-5 system;
Figure 9 shows a side view of the Figure 8 gripping assembly in the lowered position.

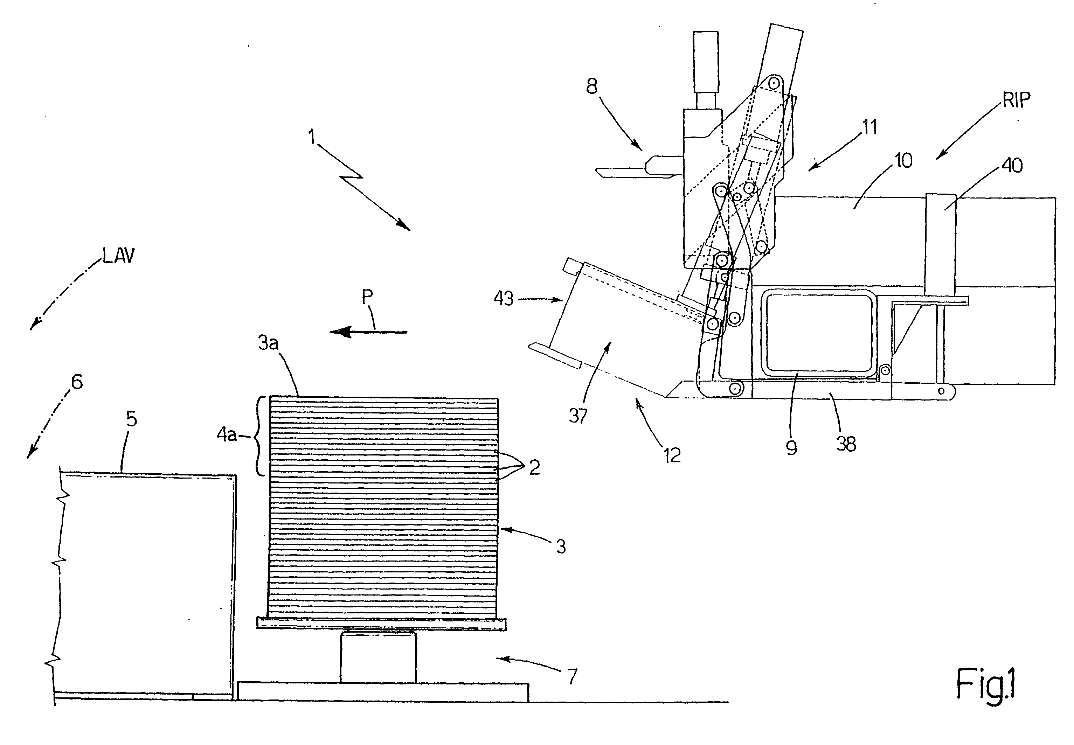

Number 1 in Figure 1 indicates a system for removing and feeding panels 2 off a stack 3. System 1 provides for sliding packs 4 off the top 3a of stack 3, and feeding the packs, as described in detail later on, onto a feed surface 5 of a work unit 6, e.g. a cutting machine. Feed surface 5 may obviously comprise a number of rollers (not shown) for sliding packs 4 easily to work unit 6.

As shown in Figure 1, system 1 also comprises a lifting device 7 for intermittently raising stack 3 of panels 2; and a device 8 for removing and feeding packs 4 to work unit 6 .

As will be obvious, lifting device 7 can be raised above feed surface 5 to form a number of packs 4 (4a, 4b, .........) of predetermined heights and comprising predetermined numbers of possibly undulated panels 2, and operates intermittently and in coordination with the other devices of system 1.

The whole of device 8 for removing and feeding packs 4 is supported on a gantry-type beam 9, which, by means of two guides (not shown) supported on two sides 10 (only one shown in Figure 1), is moved by a drive unit (not shown) back and forth, along a path P, between a rest station RIP and a work station LAV to feed packs 4 (4a, 4b, .........) to work unit 6.

Device 8 comprises at least one push assembly 11 and at least one gripping assembly 12, which, in Figure 1, are shown in a withdrawn and a raised configuration respectively. Normally, device 8 will obviously comprise at least two push assemblies 11 and at least two gripping assemblies 12.

For the sake of simplicity, however, reference will be made herein to only one push assembly 11 and one gripping assembly 12.

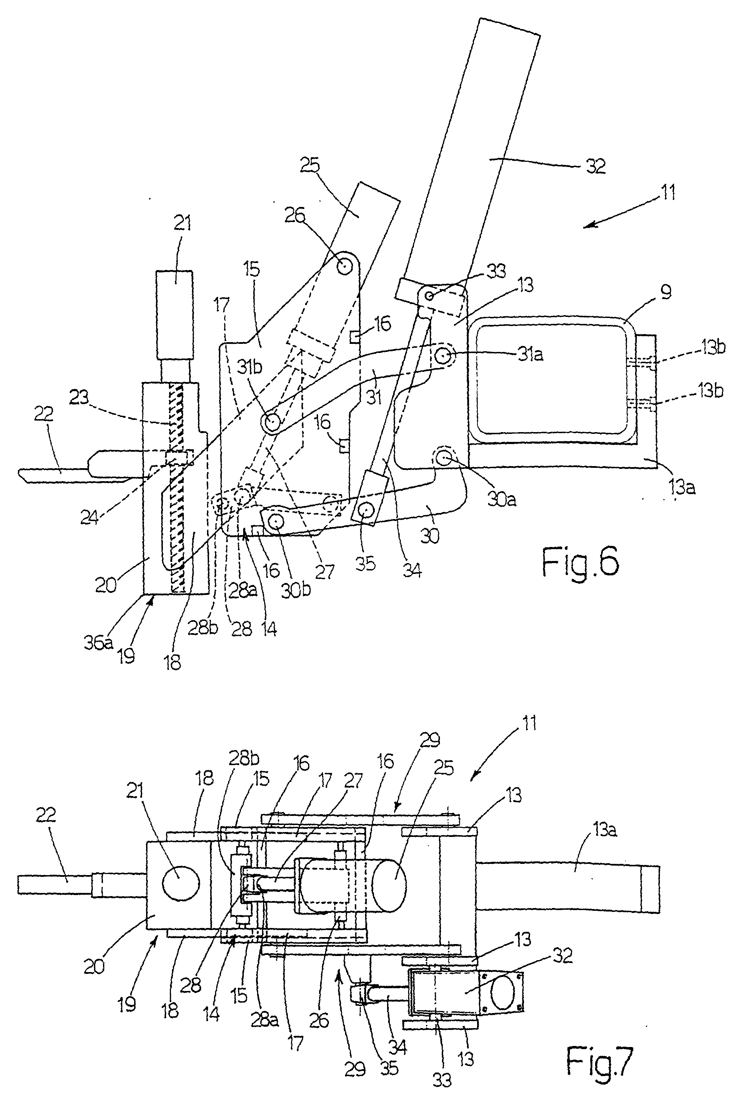

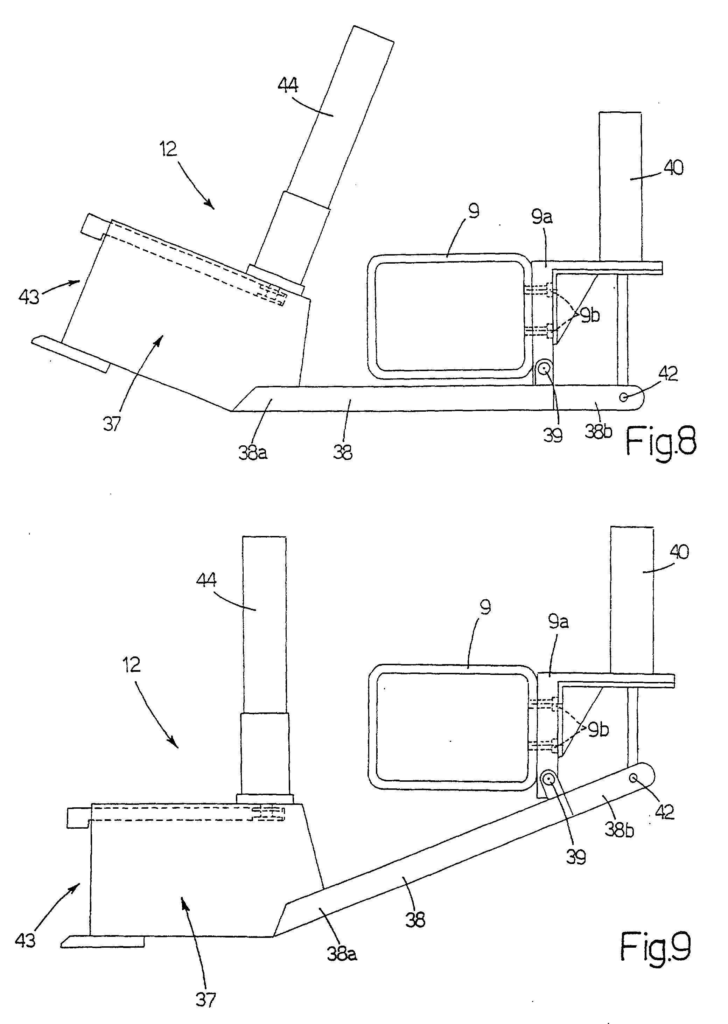

With reference to Figures 6 and 7, push assembly 11, which is connected integrally to beam 9 by.three uprights 13, generally comprises a substantially box-shaped central body 14 having two vertical sides 15 connected integrally to each other by transverse connecting members 16. The inner surfaces of sides 15 have respective oblique guides 17 along which runs a slide 18 fitted integrally with means 19 for determining the thickness of packs 4. Means 19 substantially comprise a substantially box-shaped supporting structure 20 having an electric motor 21 at the top, and a square member 22 projecting with respect to supporting structure 20. Square member 22 can be moved vertically by electric motor 21, which rotates a worm 23 mating with a nut screw 24 integral with square member 22, so that the thickness of packs 4 (4a, 4b, .........) to be pushed onto feed surface 5 can be determined by means of an electronic central control unit (not shown). Resting on the top end 3a of stack 3, square member 22 adapts to any flaws and any undulations on panels 2, so that the thrust points 36a (Figure 6) of different push assemblies 11 relate to equally thick portions of stack 3 to obtain packs 4 containing predetermined numbers of panels 2.

The thickness of packs 4 is obviously preselected according to how high lifting device 7 is raised and, consequently, how much of stack 3 projects vertically with respect to feed surface 5. Slide 18 is moved obliquely along the two guides 17 by means of an actuator 25 (Figure 6) hinged by a pin 26 to the two sides 15 of box-shaped central body 14. A rod 27 of actuator 25 is connected to slide 18 by a connecting rod 28 doubly hinged at 28a to rod 27 and at 28b to slide 18, so as to extend or withdraw extendible means 19 and so respectively lower or raise square member 22 parallel to itself.

Box-shaped central body 14 is connected to two of uprights 13 by an articulated parallelogram mechanism 29 comprising two pairs of connecting rods 30 and 31 (only one pair 30, 31 shown in Figure 6). More specifically, with reference to Figure 6 only, for the sake of simplicity, connecting rod 30 is hinged to one of uprights 13 by a pin 30a, and to respective side 15 of body 14 by a pin 30b. Similarly, connecting rod 31 is hinged to one of uprights 13 by a pin 31a, and to respective side 15 of body 14 by a pin 31b.

Mechanism 29 may be operated by an actuator 32 hinged to two of uprights 13 by a pin 33, and with a rod 34 hinged to one of connecting rods 30 by a pin 35.

Assembly 11 is made integral with beam 9 by a section 13a connecting the three uprights 13 and screwed to beam 9 by screws 13b.

In the Figure 1 rest position, means 19 are withdrawn by actuator 25 inside box-shaped central body 14, and body 14 is rotated by actuator 32 about pins 30a and 30b, so that a thrust region 36 - in particular, said thrust point 36a - is at the highest level with respect to the top 3a of stack 3.

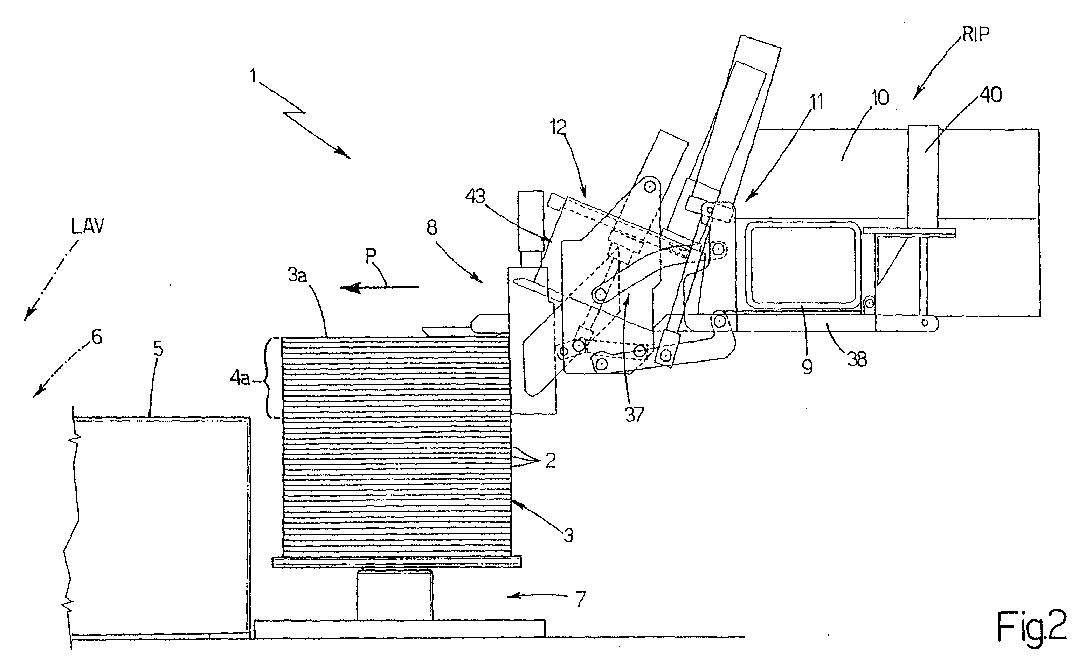

The other positions in space which may be occupied by push assembly 11 will be described in detail later on with reference to Figures 2-5.

With reference to Figures 8 and 9, gripping assembly 12 comprises clamping means 37 located at the end of a lever 38 hinged to beam 9 by a pin 39, which divides lever 38 into two arms 38a, 38b of different lengths. More specifically, the shorter arm 38b is acted on by an actuator 40 resting on a bracket 9a made integral with beam 9 by screws 9b, and the rod 41 of actuator 40 is connected to arm 38b by a pin 42, so that, when rod 41 of actuator 40 is withdrawn (Figure 9), clamping means 37 are lowered into a gripping position to grip a pack 4 (4a, 4b, .........) . Clamping means 37 comprise grippers 43 which are closed or opened by a respective actuator 44.

Operation of system 1 according to the present invention will be described with particular reference to Figures 1.5.

As seen, in the initial rest position shown in Figure 1, pickup and feed device 8 - comprising, in the example shown, one push assembly 11 and one gripping assembly 12 - is at the highest point with respect to the top 3a of stack 3. That is, actuator 25 (Figures 6 and 7) has withdrawn slide 18 and means 19 inside body 14; actuator 32 has rotated box-shaped central body 14 about pins 30a, 31a of articulated parallelogram mechanism 29; and, at the same time, actuator 40 has pushed arm 38b of lever 38 down so that means 37 are raised as shown in Figure 8. In the Figure 1 situation, device 8 is located at rest station RIP.

In the Figure 2 configuration, on the other hand, actuators 32 and 25 are operated successively to lower means 19, so that square member 22 rests on end 3a of stack 3. Any undulations on end 3a are compensated by articulated parallelogram mechanism 29; and the height of a first pack 4a is selected by appropriately selecting thrust region 36 by means of electric motor 21. As stated, the height of the first pack 4a, is obviously also selected by lifting device 7 appropriately raising the top 3a of stack 3 with respect to feed surface 5.

At this point, push assembly 11 can begin pushing first pack 4a, by sliding beam 9 - by means of a drive assembly (not shown) and from right to left in the drawings - along the two guides (not shown) fitted to sides 10.

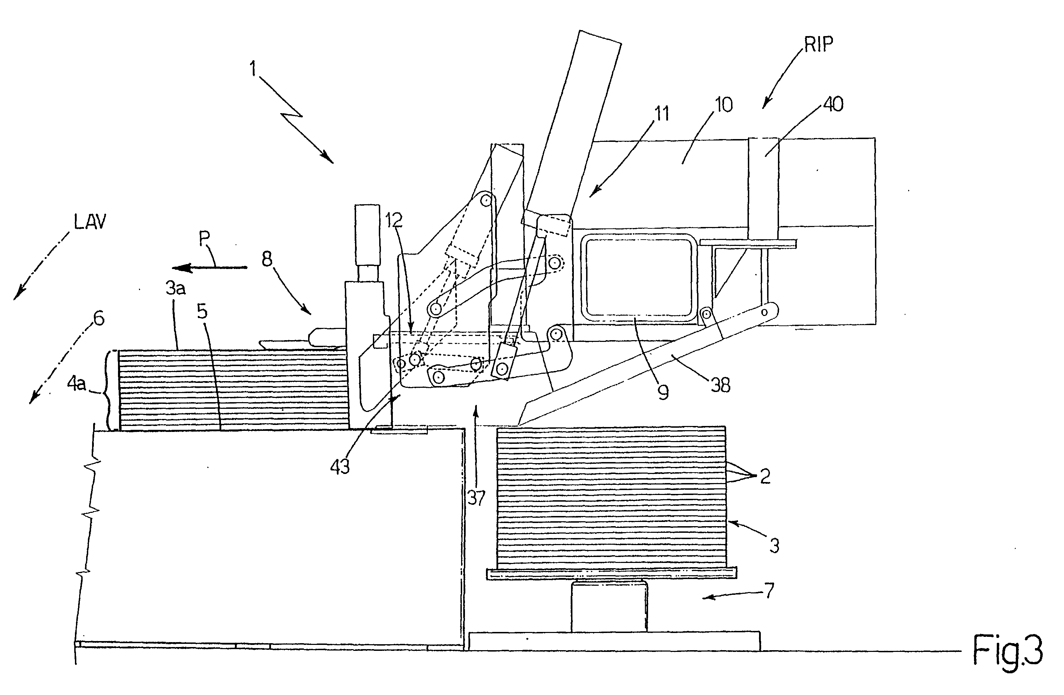

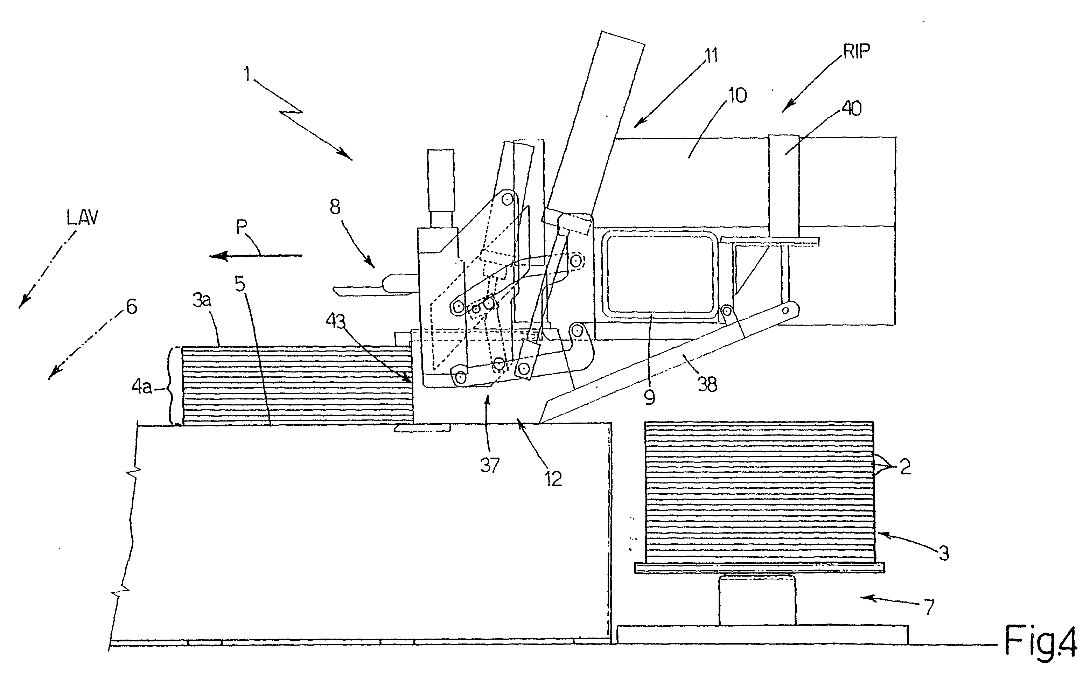

This produces the Figure 3 configuration, in which, first pack 4a has been pushed off stack 3 onto feed surface 5 by push assembly 11. At the same time, gripping assembly 12 has also begun to move down from the Figure 8 to the Figure 9 configuration, so that a rapid uninterrupted switch is made, as shown in Figure 4, from the pushing action by assembly 11 to the first pack 4a clamping action by assembly 12. As also shown in Figure 4, slide 18 is first raised obliquely, and, immediately afterwards,' first pack 4a is gripped by grippers 43 of gripping assembly 12.

Slide 18 must withdraw from first pack 4a far enough to enable box-shaped central body 14 to rotate about pins 30a, 31a without body 14 colliding with first pack 4a already gripped by grippers 43.

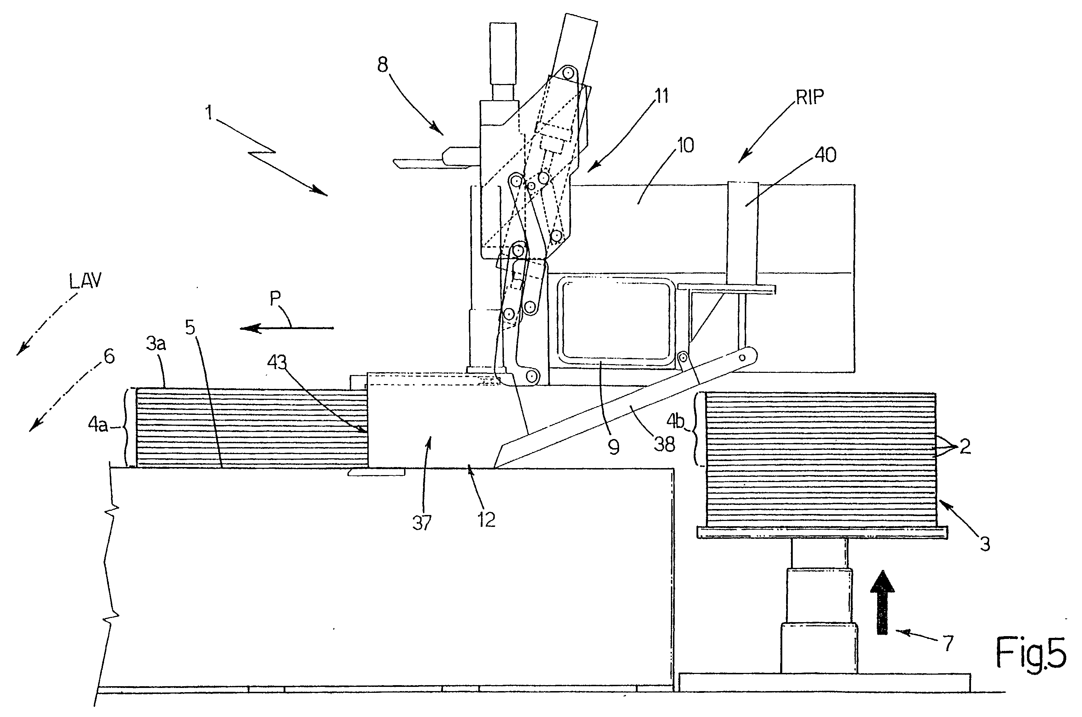

As shown in more detail in Figure 5, by this point in the feed process, the whole of device 8 has reached work station LAV where, for example, groups 4 of panels 2 are cut; and push assembly 11 has been raised completely by actuator 32, which, as already seen, by acting on articulated parallelogram mechanism 29, has also rotated body 14 about the pivots defined by pins 30a and 31a. At the same time, as shown in Figure 5, lifting device 7 has raised stack 3 high enough to define a second pack 4b of panels 2, of the same or different height from the first pack 4a supplied in the previous cycle.

At the return stage of beam 9 along path P, gripping assembly 12 is also raised, as already seen with reference to Figure 8. As shown in Figure 1 - which also shows the end of a first cycle - at the return stage, both push assembly 11 and gripping assembly 12 are therefore located, with respect to feed surface 5, higher than the top 3a of stack 3, thus preventing any part of device 8 from colliding with' any of panels 2 in second pack 4b, which thus remains undamaged and ready for a second cycle, which commences as soon as the first cycle is terminated. Figure 1 therefore shows both the start configuration of a second cycle and the end configuration of a first cycle.

The above process is obviously repeated until panels 2 have all been transferred, in the form of packs 4 (4a, 4b, .........), to work unit 6.

The advantages of the system according to the present invention lie in the enormous amount of time saved in feeding packs 4 (4a, 4b, .........) of panels 2 to work unit 6, by switching uninterruptedly from the work stage of assembly 11 to that of assembly 12, and by forming, from the same stack 3 and simultaneously with the forward movement of beam 9 to feed a first pack 4a from stack 3 to work unit 6, a second pack 4b ready for the next cycle. As such, device 7 may be raised to form second pack 4b without waiting for beam 9 to return fully to rest station RIP.

All the above operations may obviously be controlled and synchronized by an electronic central control unit (not shown).

## Claims

1. A system (1) for picking up and feeding panels (2), the system (1) comprising at least one feed surface (5) for supplying a work unit (6) for processing said panels (2); at least one lifting device (7) for intermittently raising a corresponding stack (3) of said panels (2); and at least one pickup and feed device (8) for removing and feeding one pack (4) of said panels (2) at a time off the top (3a) of said stack (3) of panels (2) onto said feed surface (5) along a path (P); said pickup and feed device (8) comprising at least one push assembly (11) and at least one separate gripping assembly (12) for respectively pushing and gripping said pack (4) of panels (2); wherein in the course of the work stroke to remove and feed said pack (4) of panels (2) from said stack (3) to said work unit (6) along said path (P), the system (1) provides for a continuous uninterrupted switch from the work stage of said push assembly (11) to the work stage of said gripping assembly (12) ; and in the course of the work stroke to remove and feed a first pack (4a) of panels from said stack (3) to said work unit (6) along said path (P) during a first cycle, said lifting device (7) is able to simultaneously raise to simultaneously form a second pack (4b) at the top (3a) of said stack (3), said second pack (4b) being ready for removal at a second cycle; and in that said push assembly (11) and said gripping assembly (12) are so raised, during the return stroke of the first cycle along said path (P), as to avoid colliding with said second pack (4b) at the top (3a) of said stack (3).

2. A system (1) as claimed in Claim 1, wherein said at least one push assembly (11) is located in front of said at least one gripping assembly (12) in the traveling direction of said beam (9) from a rest station (RIP) to a work station (LAV) in the course of the work stage to push said packs (4).

3. A system (1) as claimed in any one of the foregoing Claims, wherein said push assembly (11) comprises means (19) for determining the thickness of said packs (4); said means (19) being retractable inside a box-shaped central body (14) by an actuator (25).

4. A system (1) as claimed in Claim 3, wherein said box-shaped central body (14) is rotated about pins (30a, 31a) by an articulated parallelogram mechanism (29) and by an actuator (32).

5. A system (1) as claimed in Claim 3, wherein said means (19) are adjustable by means of an electric motor (21) for rotating a worm (23) mating with a nut screw (24) integral with a square member (22) for determining the height of said pack (4).

6. A system (1) as claimed in Claim 3, wherein said means (19) are integral with a slide (18) running along guides (17) formed in said body (14).

7. A system (1) as claimed in Claim 1, wherein said gripping assembly (12) comprises clamping means (37) located at the end of a lever (38) activated by an actuator (40).

8. A system (1) as claimed in Claim 7, wherein said means (37) comprise gripping means (43) activated by an actuator (44).

9. A system (1) as claimed in Claims 1 and 6 to 8, wherein a pack (4) is gripped simultaneously by said gripping means (43) of said gripping assembly (12) as said slide (18) is run along said guides (17) by said actuator (25).

10. A system (1) as claimed in Claims 1 and 3, wherein the thickness of said packs (4) is determined by the combined action of said lifting device (7) and said means (19) carried by said push assembly (11).

## Patentansprüche

1. Ein System (1) zum Aufnehmen und Zuführen von Platten (2), wobei das System (1 ) wenigstens eine Zuführoberfläche (5) zum Versorgen einer Arbeitseinheit (6) zum Bearbeiten der gesagten Platten (2) umfasst; ferner wenigstens eine Hubeinrichtung (7) zum intermittierenden Anheben eines entsprechenden Stapels (3) der gesagten Platten (2); und wenigstens eine Aufnahme- und Zuführeinrichtung (8) zum Entfernen und Zuführen eines Paketes (4) der gesagten Platten (2) gleichzeitig von dem oberen Ende (3a) des gesagten Stapels (3) von Platten (2) auf die gesagte Zuführoberfläche (5) entlang eines Weges (P); die gesagte Aufnahme- und Zuführeinrichtung (8) umfasst wenigstens einen Drückaufbau (11) und wenigstens einen separaten Greifaufbau (12) zum jeweiligen Drücken und Greifen des gesagten Paketes (4) von Platten (2); wobei im Ablauf des Arbeitshubs, um das gesagte Paket (4) von Platten (2) von dem gesagten Stapel (3) zu der gesagten Arbeitseinheit (6) entlang des gesagten Weges (P) zu entfernen . und zuzuführen, das System (1 ) eine kontinuierliche ununterbrochene Schaltung aus der Arbeitsstufe des gesagten Drückaufbaus (11 ) zu der Arbeitsstufe des gesagten Greifaufbaus (12) vorsieht; und im Ablauf des Arbeitshubs, um ein erstes Paket (4a) von Platten von dem gesagten Stapel (3) zu der gesagten Arbeitseinheit (6) entlang des gesagten Weges (P) während eines ersten Durchlaufes zu entfernen und zuzuführen, die gesagte Hubeinrichtung (7) in der Lage ist, sich gleichzeitig anzuheben, um gleichzeitig ein zweites Paket (4b) an dem oberen Ende (3a) des gesagten Stapels (3) auszubilden, wobei das gesagte zweite Paket (4b) fertig ist für eine Entfernung in einem zweiten Durchlauf; und in welcher der gesagte Drückaufbau (11) und der gesagte Greifaufbau (12) derart angehoben werden, während des Rückhubes des ersten Durchlaufes entlang des gesagten Weges (P), dass eine Kollision mit dem gesagten zweiten Paket (4b) an dem oberen Ende (3a) des gesagten Stapels (3) vermieden wird.

2. Ein System (1 ), wie beansprucht in Anspruch 1, wobei wenigstens ein Drückaufbau (11) vor dem gesagten wenigstens einen Greifaufbau (12) in der Bewegungsrichtung des gesagten Arms (9) von einer Ruhestation (RIP) zu einer Arbeitsstation (LAV) im Ablauf der Arbeitsstufe, um die gesagten Pakete (4) zu drücken, positioniert ist.

3. Ein System (1 ), wie beansprucht in einem der vorhergehenden Ansprüche, wobei der gesagte Drückaufbau (11 ) Mittel (19) zum Bestimmen der Dicke der gesagten Pakete (4) aufweist; wobei die gesagten Mittel (19) zurückziehbar sind innerhalb eines kastenförmigen Zentralrumpfes (14) durch ein Stellglied (25).

4. Ein System (1 ), wie beansprucht in Anspruch 3, wobei der gesagte kastenförmige Zentralrumpf (14) über Stifte (30a, 31a) durch einen gegliederten Parallelogramm-Mechanismus (29) und durch ein Stellglied (32) gedreht wird.

5. Ein System (1 ), wie beansprucht in Anspruch 3, wobei die gesagten Mittel (19) einstellbar sind mittels eines elektrischen Motors (21) zum Drehen einer Schraube (23), welche mit einer Schraubenmutter (24) zusammenpasst, die integral mit einem rechtwinkligen Element (22) ausgeführt ist, zum Bestimmen der Höhe des gesagten Paketes (4).

6. Ein System (1 ), wie beansprucht in Anspruch 3, wobei die gesagten Mittel (19) integral mit einem Schlitten (18) ausgeführt sind, welcher entlang von Führungen (17) läuft, die in dem gesagten Rumpf (14) ausgebildet sind.

7. Ein System (1), wie beansprucht in Anspruch 1, wobei der gesagte Greifaufbau (12) Greifmittel (37) umfasst, die an dem Ende eines Hebels (38) positioniert sind, welcher durch ein Stellglied (40) aktiviert wird.

8. Ein System (1), wie beansprucht in Anspruch 7, wobei die gesagten Mittel (37) Greifmittel (43) umfassen, die durch ein Stellglied (44) aktiviert werden.

9. Ein System (1), wie beansprucht in Anspruch 1 und den Ansprüchen 6 bis 8, wobei ein Paket (4) gleichzeitig durch die gesagten Greifmittel (43) des gesagten Greifaufbaus (12) gegriffen wird, wenn der gesagte Schlitten (18) entlang der gesagten Führungen (17) durch das gesagte Stellglied (25) bewegt wird.

10. Ein System (1), wie beansprucht in den Ansprüchen 1 und 3, wobei die Dicke der gesagten Pakete (4) durch die kombinierte Tätigkeit der gesagten Hubeinrichtung (7) und der gesagten Mittel (19), die durch den gesagten Drückaufbau (11) getragen werden, bestimmt wird.

## Revendications

1. Système (1) de prise et d'amenée de panneaux (2), le système (1) comprenant au moins une surface d'amenée (5) destinée à alimenter une unité de travail (6) destinée à traiter lesdits panneaux (2) ; au moins un dispositif de levage (7) destiné à monter par intermittence une pile correspondante (3) desdits panneaux (2) ; et au moins un dispositif de prise et d'amenée (8) destiné à enlever un empilement (4) desdits panneaux (2) à la fois du sommet (3a) de ladite pile (3) de panneaux (2) et à l'amener sur ladite surface d'amenée (5) le long d'un chemin (P) ; ledit dispositif de prise et d'amenée (8) comprenant au moins un ensemble de poussée (11) et au moins un ensemble de préhension distinct (12) destinés respectivement à pousser et à prendre ledit empilement (4) de panneaux (2) ; dans lequel, pendant la course de travail pour enlever et amener ledit empilement (4) de panneaux (2) de ladite pile (3) à ladite unité de travail (6) le long dudit chemin (P), le système (1) assure une commutation continue ininterrompue de la phase de travail dudit ensemble de poussée (11) à la phase de travail dudit ensemble de préhension (12) ; et pendant la course de travail pour enlever et amener un premier empilement (4a) de panneaux de ladite pile (3) à ladite unité de travail (6) le long dudit chemin (P) durant un premier cycle, ledit dispositif de levage (7) est susceptible de monter simultanément afin de former simultanément un deuxième empilement (4b) au sommet (3a) de ladite pile (3), ledit deuxième empilement (4b) étant prêt à l'enlèvement lors d'un deuxième cycle ; et ledit ensemble de poussée (11) et ledit ensemble de préhension (12) sont montés de façon à éviter, pendant la course de retour du premier cycle le long dudit chemin (P), toute collision avec ledit deuxième empilement (4b) au sommet (3a) de ladite pile (3).

2. Système (1) selon la revendication 1, dans lequel ledit au moins un ensemble de poussée (11) est situé à l'avant dudit au moins un ensemble de préhension (12) dans la direction de déplacement de ladite poutre de support (9) d'une station de repos (RIP) à une station de travail (LAV) au cours de la phase de travail pour pousser lesdits empilements (4).

3. Système (1) selon l'une quelconque des revendications précédentes, dans lequel ledit ensemble de poussée (11) comprend un moyen (19) pour déterminer l'épaisseur desdits empilements (4) ; ledit moyen ( 19) étant rétractable à l'intérieur d'un corps central en forme de boîte (14) sous l'action d'un actionneur (25).

4. Système (1) selon la revendication 3, dans lequel ledit corps central en forme de boîte (14) est mis en rotation autour d'axes (30a, 31a) par un mécanisme parallélépipédique articulé (29) et par un actionneur (32).

5. Système (1) selon la revendication 3, dans lequel ledit moyen (19) est réglable par le biais d'un moteur électrique (21) destiné à mettre en rotation une vis sans fin (23) accouplée à une vis-écrou (24) d'un seul tenant avec un élément carré (22) pour déterminer la hauteur dudit empilement (4).

6. Système (1) selon la revendication 3, dans lequel ledit moyen ( 19) est d'un seul tenant avec un coulisseau (18) se déplaçant le long de guides (17) formés dans ledit corps (14).

7. Système (1) selon la revendication 1, dans lequel ledit ensemble de préhension (12) comprend un moyen de serrage (37) situé à l'extrémité d'un levier (38) activé par un actionneur (40).

8. Système (1) selon la revendication 7, dans lequel ledit moyen (37) comprend un moyen de préhension (43) activé par un actionneur (44).

9. Système (1) selon les revendications 1 et 6 à 8, dans lequel un empilement (4) est pris simultanément par ledit moyen de préhension (43) dudit ensemble de préhension (12) pendant que ledit coulisseau (18) est déplacé le long desdits guides (17) par ledit actionneur (25).

10. Système (1) selon les revendications 1 et 3, dans lequel l'épaisseur desdits empilements (4) est déterminée par l'action combinée dudit dispositif de levage (7) et dudit moyen (19) que supporte ledit ensemble de poussée (11).
